# EUROPEAN PATENT SPECIFICATION

(11) **EP 0 876 597 B1**
(45) Date of publication and mention of the grant of the patent: **10.04.2002**
(21) Application number: 96943887.8
(22) Date of filing: 27.12.1996
(51) Int. Cl.: G01N 21/55

(54) **A RETRO-REFLECTIVE MEASURING APPARATUS**
GERAET ZUR MESSUNG DER RETRO-REFLEKTION
APPAREIL DE MESURE DE RETROREFLEXION

(30) Priority: 22.01.1996 DK 6196
(43) Date of publication of application: 11.11.1998
(73) Proprietor: Delta Lys & Optik, 2800 Lyngby (DK)
(72) Inventor: NIELSEN, Hans, Ole, DK-2800 Lyngby (DK); HANSEN, Jan, Harries, DK-2800 Lyngby (DK)
(74) Representative: Siiger, Joergen
(86) International application number: DK9600554
(87) International publication number: WO9727470

(56) References cited:
- EP-A- 0 075 422
- DE-A- 4 343 345
- US-A- 4 721 389

## Description

### Technical Field

The invention relates to an apparatus for measuring retro-reflective properties of a surface, i.e. the ability of the surface to reflect light in substantially the same direction as the incidence direction, comprising a light source for emitting light onto the surface and a detector for receiving the light reflected by the surface, the light source and/or the detector optionally communicating with separate photoconductors.

### Background Art

Efficient road signs are conditional for an optimum road safety. Consequently, when erecting new road signs it is important to ensure a high quality. Furthermore, the quality of the signs should be checked continuously to ensure that a possible replacement can be made in an economically and safety-wise optimum manner. Apparatuses are known which can perform such a check on the site.

Several countries have laid down standards for measuring retro-reflective properties - both as laboratory measuring and as in situ site measuring. In Denmark, a number of minimum values has been set for the retro-reflection coefficient for various types and colours of films at different measuring geometries. However, no guidelines exist for in situ site measuring. In Germany, standards have been laid down for the measuring geometry of the retro-reflective properties of road signs. A common European standard is being prepared. This standard is to cover both laboratory measuring, in situ measuring and minimum requirements of retro-reflective properties.

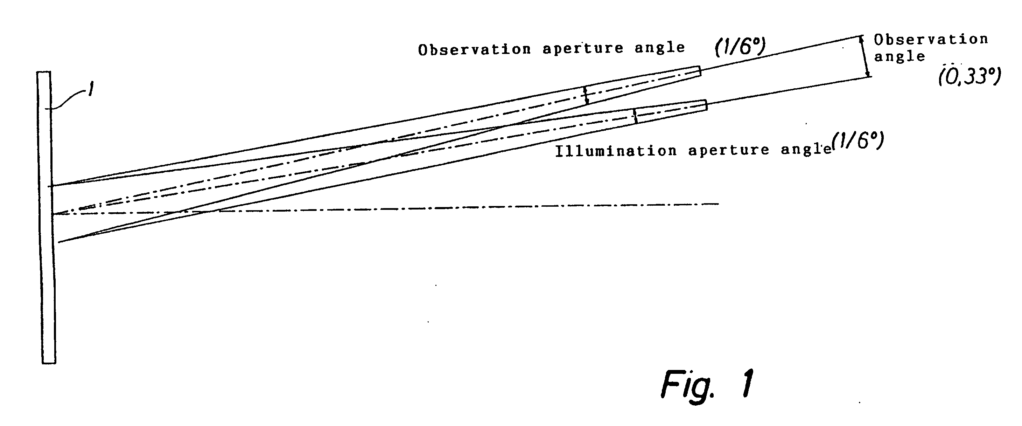

In the future standard, the measuring geometry of the in situ measuring will be very similar to the present national standards. The measuring geometry is described by means of two angles, i.e. the incidence angle of the illumination on the road sign and the angle therebetween and the observation direction, confer Fig. 1. A standard geometry of in situ measuring is an incidence angle of 5° in the vertical plane and 0.33° between the illumination direction and the observation direction. As either the light source or the human eye can be considered as punctiform, the two angle ranges around said two angles are defined such that the illumination and the observation direction is defined as angle ranges. Each of these angle ranges is a fractions of the angle between the illumination and observation direction and not necessarily of equal size. In the present instance the angle ranges are of 1/6°.

In practice, the selected measuring geometry corresponds to the conditions found in car driving. The distance to the road sign, which is a portal sign, is 100 m, the headlamp height is 65 cm and the eye level is 120 cm above the road surface. This measuring geometry is very simple relative to the actual conditions for a car with two headlamps when the road signs are situated on the side of the road. It cannot be precluded that demands for measuring geometries comprising one or more simultaneous illumination and observation directions may arise in the future.

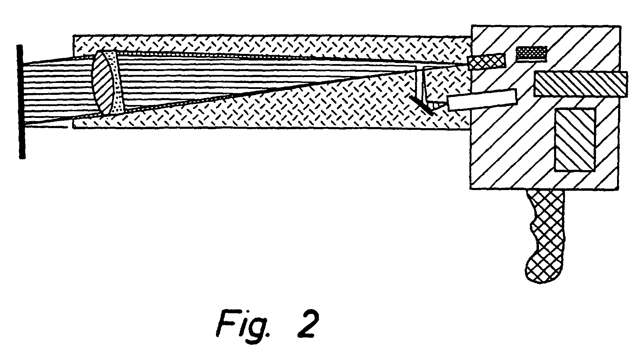

In a portable equipment, the distances necessarily have to be very small. Optically the down scaling is obtained by means of a collimating lens. The light source and the human eye (the detector) is arranged within the focal plane of the lens. When down scaling to a measuring distance of e.g. 0.5 m the distance between the light source and the human eye is 2.9 mm. As a rule, this cannot be realized at present due to the size of the available light sources and detectors. At least one of the components thus has to be moved optically by means of mirrors and beam splitters. A method used by Advanced Retro Technology is illustrated in Fig. 2. However, this method is encumbered by a number of draw-backs. Due to the beam splitter a large portion of the signal is lost. Moreover, in addition to a reduced signa-to-noise ratio it results in a reduced ability to suppress extraneous light from the surroundings. The mutual position and angular position of the beam splitters determine the measuring geometry. This requires an accurate adjustment and control procedure. Subsequently, the adjustment can be easily altered in case of impacts or high temperature cinfluences. A system comprising many optical components further involves an increased risk of misting on one or several surfaces. Moreover, the design and position of the detector causes errors in measurement relative to the standard stating that the detector is to be placed 0.33° in the vertical plane above the light source. At the described method the detector is placed in a ring member (having a centre distance of 0.33°) around the light source. In connection with highly effective prismatic retro films this problem causes a rather significant error in measurement due to the asymmetric structure of the prisms of the film.

EP 75.422 discloses an apparatus for measuring the performance of retro reflectors by means of fibre optics. The publication describes how small observation angles can be obtained at a short distance by advancing the light source and the detectors by means of optical fibres. This solves the problem of the physical distance between the light source and the detector, whereby the angle between the illumination direction and the observation direction can be made suitably small.

However, the said measuring method is encumbered by a number of draw-backs. The measuring signal is highly dependent on the selected measuring geometry. The measuring signal is particularly affected by the angle between the illumination direction and the observation direction. It is thus necessary to have complete control over this angle and the diffusion on the same (the aperture angles).

The two parameters which are essential when specifying the measuring geometry are thus laid down in the international standards. The first parameter is the angle between the illumination direction and the observation direction. This angle is usually below 1° and in portable equipment such as the present the angle is equal to 0.33°. The second parameter is the maximum illumination angles (the solid angles) and the maximum observation angle. These angles are vital for the measuring result and of great importance to the sensitivity of the system. These solid angles denoted as aperture angles are very small (typically 1/6°), confer Fig. 1.

The importance of the above requirements has been emphasized in consideration of the new prismatic retro materials. If the apparatus according to EP 0.075.422 is to meet the requirements laid down in the present standards, it is not possible to obtain a large measuring range and a small measuring distance at the same time. The requirement of a relatively large measuring range cannot be set aside. Prismatic films in particular display locally a relatively large variation in retro-reflective properties. This potential error in measurement can be reduced by using the largest possible measuring range, an enhanced measuring signal being obtained at the same time.

EP 0.075.422 does not mention the calibration of the system. However, calibration of such systems is usually performed by calibrating to a standard of the same colour as the measuring unit. Consequently, under laboratory conditions an increased number of standards have to be measured which can be used at in situ measurings. At the same time, highly effective, micro prismatic retro materials make heavy demands on the dynamic range of the apparatus. In combination, these circumstances increases the risk of making an error in measurement when using the known apparatuses.

### Brief Description of the Invention

The object of the invention is to provide a compact apparatus for measuring retro-reflection without the said draw-backs.

An apparatus of the above type is according to the invention characterised in that the ends of the photoconductors as well as the ends of the components with which the former ends communicate are juxtaposed in the focal plane of a collimating lens and are directed towards the desired measuring point on the surface. The term photoconductor denotes a fibre optical light guide bundle or individual light guides. The photoconductor(s) is/are used for transmitting light from the focal plane of the lens to the detector and/or from the light source to the focal plane. As a result, the measuring geometry can be easily reproduced. The measuring angle is entirely determined by the distance between the optical fibres. This distance can be reproduced and controlled by means of simple tools. Subsequent to manufacture and control, the measuring geometry is unaffected by any environmental influences.

Furthermore, according to the invention, the beam path can be folded, whereby a particularly compact apparatus is obtained.

According to the invention, the apparatus can further be provided with a visual field limiter in form of a diaphragm ensuring that only light of the correct direction is transmitted in the measuring system.

Moreover, the apparatus can comprise a light trap acting to reduce the amount of diffused light.

Finally, the apparatus according to the invention can comprise an interference filter of the graded index type (GIF) providing the desired spectral distribution of the emitted and/or received light.

### Brief Description of the Drawings.

The invention is explained in greater detail below with reference to the accompanying drawings in which
Fig. 1 illustrates the measuring geometry of the retro-reflection,
Fig. 2 illustrates a known retro-reflective measuring apparatus,
Fig. 3 illustrates the retro-reflective measuring apparatus according to the invention and
Fig. 4 illustrates an alternative embodiment of the retro-reflective measuring apparatus according to the invention.

### Best Mode for Carrying Out the Invention

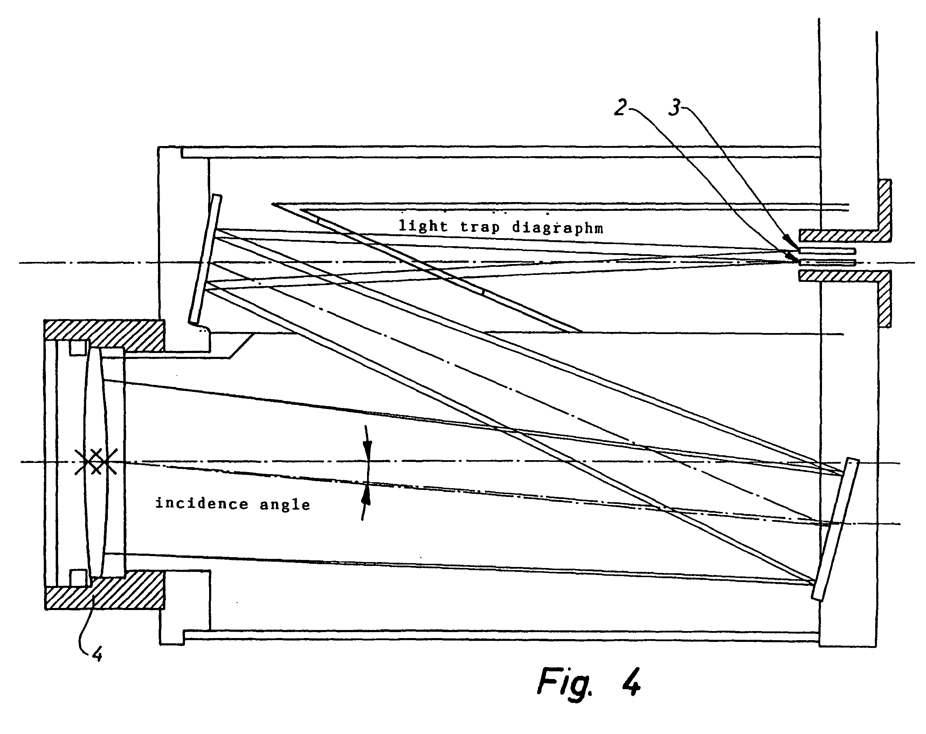

The retro-reflective measuring apparatus according to the invention comprises a light source 2, a detector 3 and a fibre-optical photoconductor for transmitting the light. By transmitting the light in optical fibres, the problem of the physically large photoconductors and detectors is avoided. Consequently, it is possible to arrange these component more arbitrarily with their respective control circuits. The optical fibres are adapted according to the geometric measuring conditions by selecting suitable fibre diameter, centre and measuring distances. The fibre diameter determines the aperture angle. Very small aperture angles are desirable. However, this entails that the detector signal is correspondingly weaker. In combination with the down scaled measuring distance the centre distance between the fibres provides an observation angle of typically 0.33°, confer Fig. 1. When using the commercially available photoconductors, this distance can optionally be reduced to being less than 1 mm, whereby further down scaling of the measuring distance is possible. The optical system can further be folded by means of mirrors rendering the system more compact, confer Fig. 4. When using optical fibres in the said configuration it is not possible to control the emission characteristics of the individual fibre end. The light is diffused in directions not having a favourable effect on the measuring per se. This does not effect the measuring geometry. However, a constant error signal occurs (as a result of the diffused light). Due to the diffused light from the emitter fibre, the error signal which is incident on an inner surface and received at the receiver fibre obviously is to be attenuated as much as possible. A combined light trap and visual field limiter (diaphragm) is used for this purpose. The light trap reduces the amount of diffused light. The diaphragm ensures only light of the correct direction is transmitted in the measuring system.

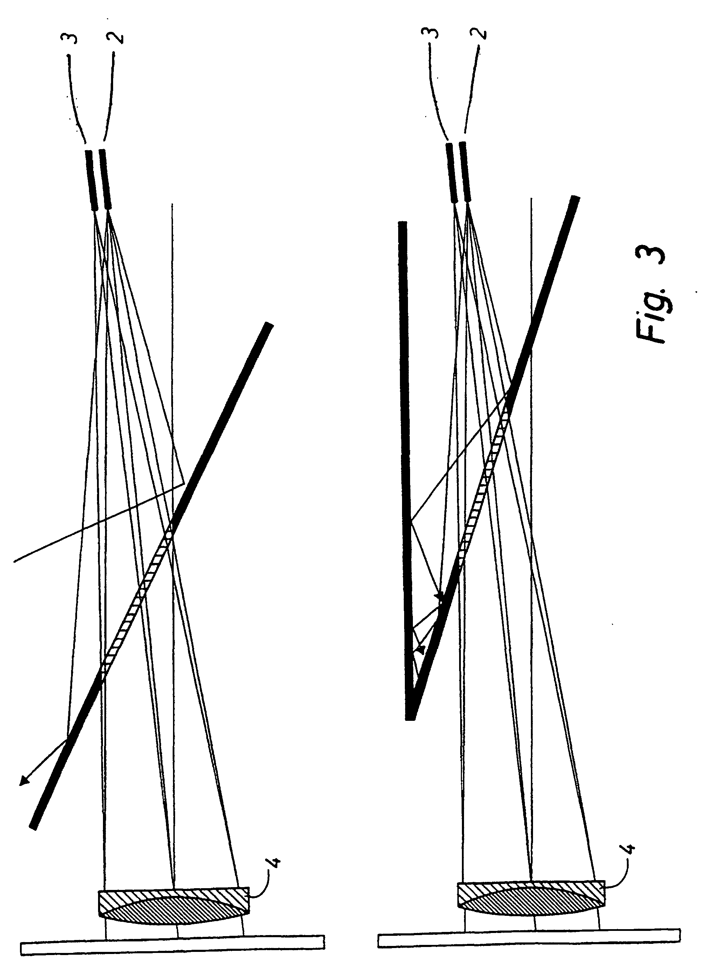

As illustrated in Fig. 3, the measuring signal is passed directly through the diaphragm aperture. The diaphragm aperture is provided with clear-cut sides to minimize back-scatter therefrom. The light trap comprises one or more components having a high degree of reflection (minimum diffuse reflection), the non-reflective portion of the beam being absorbed at the same time. At the use of two components, these form an acute angle. When the light hits the surface, a portion thereof is absorbed. The rest of the light is reflected in forward direction and absorbed at the next reflection, etc. This corresponds to a black hole, if the surfaces are clean and shiny.

The measuring geometry of this system is easily reproduced. The observation angle is determined by the centre distance between the optical photoconductors. This distance can be reproduced and controlled by means of simple measuring tools. Subsequent to manufacture and control, the measuring geometry is unaffected by any environmental influences.

The fibre optic configuration provides measuring conditions corresponding to the standard measuring conditions and thus measures correctly on prismatic retro films.

Requirements are laid down in the standard in relation to the spectral emission from the light source and the spectral sensitivity of the detector. Usually, these requirements cannot be met by conventional light sources and conventional detectors. Usually, the spectral alignment of the sources and the detectors is provided by means of filter glasses. In order to meet the requirements of high accuracy, complex combinations of filter glasses are used. In addition to being complex this type of filtering is also very low in energy efficiency. It is thus advantageous to incorporate the filtering into one component with the correct characteristics for spectral alignment of the entire system.

This object can also be obtained by means an interference filter of the graded index type (GIF, Ref. Applied Optics, Vol. 31, No. 25, 1 Sep. 1992). In principle, any spectral transmission characteristics can be provided by means of GIF-filters.

At a spectral alignment of a 3,200 °K halogen source (a Si detector combination for D65-illumination and CIE-eye sensitivity ) an enhanced light economy of a factor 3-5 relative to the filter glass combinations can be obtained.

## Claims

1. An apparatus for measuring retro-reflective properties of a surface (1), i.e the ability of the surface to reflect light in essentially the same direction as the incidence direction, comprising a light source (2) for emitting light onto the surface (1) and a detector (3) for receiving the light reflected by the surface (1), the light source and/or the detector optionally communicating with separate photoconductors, **characterised in that** the ends of the photoconductors as well as the ends of the components with which the former ends communicate are juxtaposed in the focal plane of a collimating lens (4) and are directed towards the desired measuring point on the surface.

2. An apparatus as claimed in claim 1, **characterised in that** the light source (2) and the end of a photoconductor of the detector (3) are juxtaposed in the focal plane of the lens (4) and directed to the desired measuring point on the surface (1).

3. An apparatus as claimed in claim 1, **characterised in that** the detector (3) and the end of a photoconductor of the light source (2) are juxtaposed in the focal plane of the lens (4) and directed to the desired measuring point.

4. An apparatus as claimed in claim 1, **characterised in that** the beam path is folded (Fig. 4).

5. An apparatus as claimed in claim 1, **characterised in that** a visual field limiter in form of a diaphragm ensures that only light of the correct direction is transmitted in the measuring system.

6. An apparatus as claimed in claim 1, **characterised in that** a light trap reduces the amount of diffused light.

7. An apparatus as claimed in claim 1**, characterised in that** it comprises an interference filter of the graded index type (GIF) for providing the desired spectral distribution of the emitted and/or received light.

## Patentansprüche

1. Gerät zur Messung von Retroreflexionseigenschaften einer Oberfläche (1), insbesondere der Fähigkeit einer Oberfläche Licht in die gleiche Richtung zu reflektieren, wie die einfallende Richtung, mit einer Lichtquelle (2) zur Emission von Licht auf die Oberfläche (1) und einem Detektor (3) zum Empfang des von der Oberfläche (1) reflektierten Lichtes, wobei die Lichtquelle und/oder der Detektor optional über separate Lichtleiter verbunden sind,
**dadurch gekennzeichnet, daß** sowohl die Enden der Lichtleiter als auch die Enden der Komponenten, mit welchen die erstgenannten Enden verbunden sind, in der Brennebene einer Sammellinse (4) nebeneinandergestellt sind und in Richtung des gewünschten Meßpunktes auf der Oberfläche gerichtet sind.

2. Gerät nach Anspruch 1,
**dadurch gekennzeichnet, daß** die Lichtquelle (2) und das Ende eines Lichtleiters des Detektors (3) in der Brennebene der Linse (4) nebeneinandergestellt und auf den gewünschten Meßpunkt auf der Oberfläche (1) gerichtet sind.

3. Gerät nach Anspruch 1 oder 2,
**dadurch gekennzeichnet, daß** der Detektor (3) und das Ende eines Lichtleiters der Lichtquelle (2) in der Brennebene der Linse (4) nebeneinandergestellt und auf den gewünschten Meßpunkt gerichtet sind.

4. Gerät nach einem der vorhergehenden Ansprüche,
**dadurch gekennzeichnet, daß** der Strahlengang gefaltet ist (Fig. 4).

5. Gerät nach einem der vorhergehenden Ansprüche,
**dadurch gekennzeichnet, daß** ein Gesichtsfeldbegrenzer in Form einer Blende sicherstellt, daß nur Licht aus der richtigen Richtung in das Meßsystem übertragen wird.

6. Gerät nach einem der vorhergehenden Ansprüche,
**dadurch gekennzeichnet, daß** eine Lichtschwächeinheit die Menge von diffusen Licht abschwächt.

7. Gerät nach einem der vorhergehenden Ansprüche,
**gekennzeichnet durch**
einen Interferenzfilter vom gestuftem Indextyp (GIF) zur Sicherstellung der gewünschten spektralen Abteilung des emittierten und/oder empfangenen Lichtes.

## Revendications

1. Un appareil pour mesurer les propriétés de rétroréflexion d'une surface (1), c'est-à-dire l'aptitude d'une surface à réfléchir de la lumière essentiellement dans la même direction que la direction d'incidence, comprenant une source de lumière (2) pour émettre de la lumière sur la surface (1) et un détecteur (3) pour recevoir la lumière réfléchie par la surface (1), la source de lumière et/ou le détecteur communiquant optiquement avec des photoconducteurs séparés, **caractérisé en ce que** les extrémités des photoconducteurs ainsi que les extrémités des composants avec lesquels les extrémités des photoconducteurs communiquent sont juxtaposées dans le plan focal d'une lentille de collimation (4) et sont dirigées vers le point de mesure désiré sur la surface.

2. Un appareil selon la revendication 1, **caractérisé en ce que** la source de lumière (2) et l'extrémité d'un photoconducteur du détecteur (3) sont juxtaposées dans le plan focal de la lentille (4) et dirigées vers le point de mesure souhaité sur la surface (1).

3. Un appareil selon la revendication 1, **caractérisé en ce que** le détecteur (3) et l'extrémité d'un photoconducteur de la source de lumière (2) sont juxtaposés dans le plan focal de la lentille (4) et dirigés vers le point de mesure souhaité.

4. Un appareil selon la revendication 1, **caractérisé en ce que** le trajet de faisceau est réfléchi (figure 4).

5. Un appareil selon la revendication 1, **caractérisé en ce qu'**un limiteur de champ visuel sous la forme d'un diaphragme assure que seulement, la lumière de la direction convenable est transmise dans le système de mesure.

6. Un appareil selon la revendication 1, **caractérisé en ce qu'**un piège de lumière réduit la quantité de lumière diffusée.

7. Un appareil selon la revendication 1, **caractérisé en ce qu'**il comprend un filtre d'interférence du type à index à gradation (GIF) pour fournir la répartition spectrale souhaitée de la lumière émise et/ou reçue.
